# EUROPÄISCHE PATENTANMELDUNG

(11) **EP 1 739 943 A1**
(43) Veröffentlichungstag der Anmeldung: **03.01.2007**
(21) Anmeldenummer: 05014006.0
(22) Anmeldetag: 29.06.2005
(51) Int. Cl.: H04N 1/00, G06F 17/00

(54) **Mobiles Datenverarbeitungs-Handgerät**

(71) Anmelder: Schweers Informationstechnologie GmbH, 40670 Meerbusch (DE)
(72) Erfinder: Schweers, Michael, 40670 Meerbusch (DE)
(74) Vertreter: DR. STARK & PARTNER

(57) **Zusammenfassung**

Die Erfindung betrifft ein mobiles Datenverarbeitungs-Handgerät für die Bearbeitung von durch eine Bedienperson detektierten Verstößen gegen Vorschriften oder dergleichen, insbesondere für die Erfassung von Verstößen gegen Ordnungswidrigkeiten, wie z.B. Verkehrsvorschriften bei der Überwachung des ruhenden und/oder fließenden Verkehrs, mit einem eine Vorderseite und eine Rückseite aufweisenden und eine Datenverarbeitungseinheit beinhaltenden Gehäuse, in dessen Vorderseite sowohl eine Eingabeeinrichtung für die Dateneingabe und/oder Bedienung des Datenverarbeitungs-Handgeräts als auch eine Anzeigeeinrichtung für die Ausgabe von Bild- und/oder Verarbeitungs- und/oder Steuerungsinformationen vorgesehen sind.

Um ein mobiles Datenverarbeitungs-Handgerät anzugeben, das eine einfache Handhabung und eine umkomplizierte Bedienung ermöglicht, soll dem mobilen Datenverarbeitungs-Handgerät eine insbesondere als Digitalkamera ausgebildete digitale Bilderfassungseinrichtung zugeordnet sein und in der Vorderseite des Gehäuses zumindest eine weitere Anzeigeeinrichtung für die Ausgabe von Bild- und/oder Verarbeitungs- und/oder Steuerungsinformationen vorgesehen und mit der digitalen Bilderfassungseinrichtung verbunden sein.

## Beschreibung

Die Erfindung betrifft ein mobiles Datenverarbeitungs-Handgerät für die Bearbeitung von durch eine Bedienperson detektierten Verstößen gegen Vorschriften oder dergleichen, insbesondere für die Erfassung von Verstößen gegen Ordnungswidrigkeiten, wie z.B. Verkehrsvorschriften bei der Überwachung des ruhenden und/oder fließenden Verkehrs, mit einem eine Vorderseite und eine Rückseite aufweisenden und eine Datenverarbeitungseinheit beinhaltenden Gehäuse, in dessen Vorderseite sowohl eine Eingabeeinrichtung für die Dateneingabe und/oder Bedienung des Datenverarbeitungs-Handgeräts als auch eine Anzeigeeinrichtung für die Ausgabe von Bild- und/oder Verarbeitungs- und/oder Steuerungsinformationen vorgesehen sind.

Die Detektion von Verstößen gegen Vorschriften oder dergleichen kann dabei ausschließlich durch die Bedienperson selbst erfolgen, z. B. bei der Überprüfung von Parkberechtigungen bei abgestellten Fahrzeugen, oder wenn die Bedienperson beobachtet, dass ein Hundehalter die Exkremente seinen Hundes nicht vorschriftgemäß beseitigt. Bei der Detektion eines Verstoßes gegen Vorschriften oder dergleichen kann sich die Bedienperson aber auch technischer Hilfsmittel bedienen. So kann zur Feststellung eines Geschwindigkeitsverstoßes bei einem Kraftfährzeugführer als Hilfsmittel beispielsweise eine Laserpistole, eine Lichtschranke oder dergleichen zur Anwendung kommen.

Aus der Praxis sind verschiedenste Datenverarbeitungsgeräte bekannt, die zum Teil auch zur Erfassung und Verarbeitung von Daten außerhalb von Gebäuden, d. h. "vor Ort", verwendet werden können. Zumeist sind solche mobile Systeme jedoch hinsichtlich Größe und Gewicht zwar transportable, jedoch nicht für einen längeren Zeitraum in der Hand zu halten oder ohne spezielle Tragehilfe von einer Bedienperson mitführbar.

Für die Überwachung des ruhenden Verkehrs ist eine entsprechend klein und leicht ausgebildetes Handgerät bekannt, welches über eine Eingabeeinrichtung sowie eine Anzeigeeinrichtung verfügen.

Nachteilig hierbei ist, dass zum einen die erforderlichen Daten, wie z. B. das Kennzeichen eines falsch parkenden Kraftfahrzeugs, per Hand eingegeben werden müssen und - falls erforderlich - eine Kamera für die Erstellung von Fotos für den eindeutigen Nachweis des Verkehrsdeliktes sowie ggf. ein Mobiltelefon oder/und ein Funkgerät für eine eventuell erforderliche Telekommunikation und/oder einen Datentransfer jeweils mitgeführt werden muss. Insoweit ist sowohl der "Transportaufwand" deutlich erhöht als auch eine komplizierte Handhabung gegeben, da die Bedienperson zwei oder mehr separate Geräte handhaben und bedienen muss.

Aufgabe der Erfindung ist es, die vorgenannten Nachteile zu vermeiden und ein mobiles Datenverarbeitungs-Handgerät anzugeben, das eine einfache Handhabung und eine umkomplizierte Bedienung ermöglicht.

Diese Aufgabe wird dadurch gelöst, dass dem gattungsgemäßen mobilen Datenverarbeitungs-Handgerät eine insbesondere als Digitalkamera ausgebildete digitale Bilderfassungseinrichtung zugeordnet ist und in der Vorderseite des Gehäuses zumindest eine weitere Anzeigeeinrichtung für die Ausgabe von Bild- und/oder Verarbeitungs- und/oder Steuerungsinformationen vorgesehen und mit der digitalen Bilderfassungseinrichtung verbunden ist. Des weiteren kann zur Daten- und Sprachübertragung sowie ggf. Sprachaufzeichnung eine Kommunikationseinheit zugeordnet sein

Die digitale Bilderfassungseinrichtung kann dabei über eine Leitung oder aber "drahtlos" per Funk, Infrarot, Ultraschall, insbesondere per Kurzstreckenfunk mit dem mobilen Datenverarbeitungs-Handgerät verbunden sein.

Dabei kann eine getrennte Anzeige oder eine gemischte Anzeige von Bild- und/oder Verarbeitungs- und/oder Steuerungsinformationen auf zumindest einer der Anzeigeeinrichtungen vorgesehen, insbesondere wahlweise beliebig einstellbar, sein.

Das mobile Datenverarbeitungs-Handgerät weist dabei eine relativ geringe Größe auf, so dass es auch bei einer längeren Bediendauer, insbesondere für einen mehrere Stunden langen Zeitraum, von der Bedienperson in der Hand gehalten oder an einem Gürtel befestigt getragen werden kann, ohne dass es zu übermäßigen Belastungen kommt.

Insoweit können die Abmessungen ca. 150 * 50 * 30 mm bishin zu 250 * 100 * 60 mm, insbesondere unterseitig 175 * 60* 35 mm und oberseitig 230 * 80 mm betragen. Das Gewicht kann 300 bis 800 gr., insbesondere ca. 600 gr. betragen.

Vorteilhafterweise kann das Gehäuse zur Verringerung des Volumens bei Nichtbenutzung oder aber, wenn ein Teilbereich wie z. B. die digitale Bilderfassungseinrichtung momentan nicht benötigt wird, aus mehreren gelenkig miteinander verbundenen Teilbereichen zusammenklappbar ausgebildet sein. Dabei kann der eine Teilbereich gegenüber dem Hauptbereich des Gehäuses deutlich kleiner ausgebildet sein und somit nur einen kleinen Anteil beim Heranklappen verdecken. Insbesondere kann das Heranklappen auch rückseitig erfolgen oder aber ein Schiebemechanismus vorgesehen sein. Bei einer externen digitalen Bilderfassungseinrichtung kann auch eine Aufnahme bzw. ein Freiraum zur Anbringung bzw. zum Verstauen der Bilderfassungseinrichtung vorgesehen sein.

Eine übliche Energieversorgung durch eine insbesondere wiederaufladbare Speicher für elektrische Energie ist ebenfalls vorgesehen.

Insoweit ist sowohl der Transport als auch die Bedienung durch die Beschränkung auf ein einziges Handgerät deutlich vereinfacht.

Vorzugsweise kann die Bilderfassungseinrichtung ebenfalls in das Gehäuse, insbesondere in die Rückseite des Gehäuses, integriert sein, so dass weder ein separates Element - wenn auch von sehr geringer Größe - mitgeführt oder zumindest bei der Bilderfassung gehandhabt werden muss. Die Bilderfassungseinrichtung kann dabei insbesondere an der Stirnseite oder an einer seitlichen Gehäusefläche angeordnet sein. Insbesondere kann die entsprechenden Fläche hierfür einen vorstehenden bzw. schräg ausgerichteten Bereich aufweisen. Übliche Gestaltungsweisen, wie z. B. eine leicht versenkte Anordnung oder entfernbare oder verlagerbare Abdeckung, sind selbstverständlich möglich.

Erfindungsgemäß kann in der Vorderseite des Gehäuses zumindest eine weitere Eingabeeinrichtung für die Bedienung der Bilderfassungseinrichtung vorgesehen sein, so dass für jede separate Funktionseinheit ein spezielles Bedienfeld vorgesehen ist und insoweit Tastenmehrfachbelegungen oder dergleichen vermieden werden und eine besonders einfache Bedienung der umfangreichen Funktionen des mobilen Datenverarbeitungs-Handgeräts möglich ist.

Auch kann in dem Gehäuse eine weitere Datenverarbeitungseinheit für die Verarbeitung der Daten der Bilderfassungseinrichtung vorgesehen sein, so dass durch die Trennung der Datenverarbeitungseinheiten für die unterschiedlichsten Funktionseinheiten eine wechselseitige Beeinflussung der maximal möglichen Arbeitsleistung nicht erfolgt, so dass beispielsweise die Datenbearbeitung von eingehenden Daten durch eine zeitgleich erfolgende Bilderfassung nicht beeinträchtigt wird.

Bei einem bevorzugten Ausführungsbeispiel der Erfindung kann die Bilderfassungseinrichtung in einem abgegrenzten, insbesondere auch abgewinkelten, Bereich der Rückseite des Gehäuses vorgesehen sein, so dass bei einer üblichen Halteposition des mobilen Datenverarbeitungs-Handgeräts die Ausrichtung der Bilderfassung auf einen üblichen Anwendungszweck, beispielsweise die Erfassung von Kraftfahrzeugkennzeichen oder zur Beweisaufnahme, abgestimmt ist. Vorzugsweise kann auch eine Verstellbarkeit der Ausrichtung der Bilderfassungseinrichtung, beispielsweise zur Anpassung an die Größe der Bedienperson oder zur Abstimmung auf den jeweiligen Anwendungszweck, gegeben sein.

Auch kann die weitere Anzeigeeinrichtung in einem abgegrenzten, insbesondere auch abgewinkelten, Bereich der Vorderseite des Gehäuses vorgesehen sein, so dass bei einer üblichen Halteposition des mobilen Datenverarbeitungs-Handgeräts bei der Bilderfassung die weitere Anzeigeeinrichtung in ihrer Ausrichtung auf den Blickwinkel der Bedienperson bei einer üblichen Bilderfassung, beispielsweise die Erfassung von Kraftfahrzeugkennzeichen, abgestimmt ist. Vorzugsweise kann auch eine Verstellbarkeit der Ausrichtung der weiteren Anzeigeeinrichtung, beispielsweise zur Anpassung an die Größe der Bedienperson oder zur Abstimmung auf den jeweiligen Anwendungszweck, gegeben sein.

Hierfür kann auch die weitere Eingabeeinrichtung in einem abgegrenzten, insbesondere auch abgewinkelten, Bereich der Vorderseite des Gehäuses vorgesehen sein.

Erfindungsgemäß kann zumindest eine Anzeigeeinrichtung als Touch-Screen ausgebildet sein und die entsprechende Eingabeeinrichtung ebenfalls durch diesen Touch-Screen gebildet sein, so dass zum einen eine Reduzierung des Platzbedarfs durch die Zusammenfassung dieser beiden Einrichtungen gegeben ist und zum anderen durch das Einblenden entsprechender, ggf. durch Symbole gekennzeichnetes Menüs auf dem Touch-Screen eine besonders einfache Bedienung möglich ist.

Weiterhin kann in das Gehäuse eine Druckeinheit zum Ausdrucken von Informationen integriert sein, so dass eine Ausgabe von erfassten Daten, beispielsweise in Form eines Protokolls, einer Quittung oder eines Strafzettels, oder von einer durch die. Bilderfassungseinrichtung getätigten Aufnahme, in schriftlicher Form oder als Fotoausdruck möglich ist.

Auch kann das Erfassungssystem als mobile Kommunikationseinheit für Daten und Sprache sowie als Sprachaufzeichnungssystem genutzt werden. Hierzu ist das Gerät mit mindestens je einer Kommunikationseinheit, einem Lautsprecher sowie einem Mikrofon ausgestattet. Hierbei können Mikrofon sowie Lautsprecher wahlweise auf der Vorder- oder Rückseite, seitlich oder oben bzw. unten im Gehäuse untergebraucht sein.

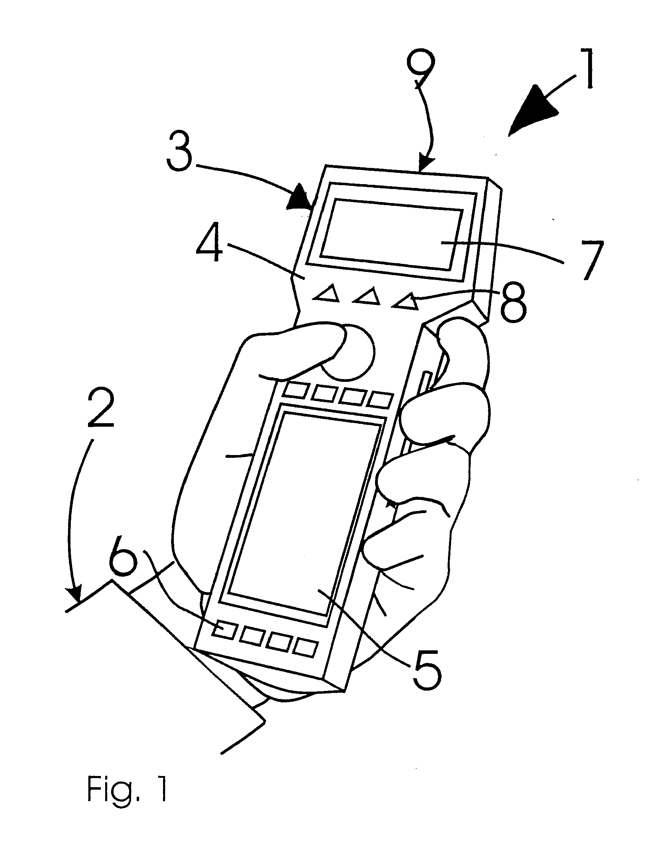

Im Folgenden wird ein in der Zeichnung dargestelltes Ausführungsbeispiel der Erfindung erläutert. Es zeigen:

Die einzige Figur zeigt ein mobiles Datenverarbeitungs-Handgerät 1 für die Bearbeitung von durch eine in der Zeichnung nur ansatzweise dargestellte Bedienperson 2.

Das Handgerät 1 weist dabei ein Gehäuse 3 mit einer Vorderseite 4 und einer in der Zeichnung nicht dargestellten Rückseite auf. In der Forderseite 4 sind sowohl eine erste Anzeigeeinrichtung 5 und eine erste Eingabeeinrichtung 6 als auch eine zweite Anzeigeeinrichtung 7 und eine zweite Eingabeeinrichtung 8 vorgesehen. Diese sind jeweils von ihrer Lage zu Funktionseinheiten zusammengefasst und entsprechend beieinander angeordnet.

Bei einer bevorzugten Ausführungsform ist die erste Anzeigeeinrichtung 5 zusammen mit der ersten Eingabeeinrichtung 6 ausschließlich für die Dateneingabe und die Bedienung des mobilen Datenverarbeitungs-Handgeräts 1 vorgesehen, wohingegen die zweite Anzeigeeinrichtung 7 mit der zweiten Eingabeeinrichtung 8 für die Bedienung einer stirnseitig vorgesehenen, in der Zeichnung nicht dargestellten digitalen Bilderfassungseinrichtung 9 bestimmt ist.

## Patentansprüche

1. Mobiles Datenverarbeitungs-Handgerät (1) für die Bearbeitung von durch eine Bedienperson (2) detektierten Verstößen gegen Vorschriften oder dergleichen, insbesondere für die Erfassung von Ordnungswidrigkeiten, wie z.B. Verstößen gegen Verkehrsvorschriften bei der Überwachung des ruhenden und/oder fließenden Verkehrs, mit einem eine Vorderseite (4) und eine Rückseite aufweisenden und eine Datenverarbeitungseinheit beinhaltenden Gehäuse (3), in dessen Vorderseite (4) sowohl eine Eingabeeinrichtung (6) für die Dateneingabe und/oder Bedienung des Datenverarbeitungs-Handgeräts (1) als auch eine Anzeigeeinrichtung (5) für die Ausgabe von Bild- und/oder Verarbeitungs- und/oder Steuerungsinformationen vorgesehen sind, **dadurch gekennzeichnet, dass** dem mobilen Datenverarbeitungs-Handgerät (1) eine insbesondere als Digitalkamera ausgebildete digitale Bilderfassungseinrichtung (9) zugeordnet ist und in der Vorderseite (4) des Gehäuses (3) zumindest eine weitere Anzeigeeinrichtung (7) für die Ausgabe von Bild- und/oder Verarbeitungs- und/oder Steuerungsinformationen vorgesehen und mit der digitalen Bilderfassungseinrichtung (9) verbunden ist.

2. Mobiles Datenverarbeitungsgerät-Handgerät (1) nach dem vorhergehenden Anspruch, **dadurch gekennzeichnet, dass** die Bilderfassungseinrichtung (9) ebenfalls in das Gehäuse (3), insbesondere in die Rückseite des Gehäuses (3), integriert ist.

3. Mobiles Datenverarbeitungsgerät-Handgerät (1) nach einem der vorhergehenden Ansprüche, **dadurch gekennzeichnet, dass** in der Vorderseite (4) des Gehäuses (3) zumindest eine weitere Eingabeeinrichtung (8) für die Bedienung der Bilderfassungseinrichtung (9) vorgesehen ist.

4. Mobiles Datenverarbeitungsgerät-Handgerät (1) nach einem der vorhergehenden Ansprüche, **dadurch gekennzeichnet, dass** in dem Gehäuse (3) eine weitere Datenverarbeitungseinheit für die Verarbeitung der Daten der Bilderfassungseinrichtung (9) vorgesehen ist.

5. Mobiles Datenverarbeitungsgerät-Handgerät (1) nach einem der vorhergehenden Ansprüche, **dadurch gekennzeichnet, dass** die Bilderfassungseinrichtung (9) in einem abgegrenzten, insbesondere auch abgewinkelten, Bereich der Rückseite des Gehäuses (3) vorgesehen ist.

6. Mobiles Datenverarbeitungsgerät-Handgerät (1) nach einem der vorhergehenden Ansprüche, **dadurch gekennzeichnet, dass** die weitere Anzeigeeinrichtung (7) in einem abgegrenzten, insbesondere auch abgewinkelten, Bereich der Vorderseite (4) des Gehäuses (3) vorgesehen ist.

7. Mobiles Datenverarbeitungsgerät-Handgerät (1) nach einem der vorhergehenden Ansprüche, **dadurch gekennzeichnet, dass** die weitere Eingabeeinrichtung (8) in einem abgegrenzten, insbesondere auch abgewinkelten, Bereich der Vorderseite (4) des Gehäuses (3) vorgesehen ist.

8. Mobiles Datenverarbeitungsgerät-Handgerät (1) nach einem der vorhergehenden Ansprüche, **dadurch gekennzeichnet, dass** zumindest eine Anzeigeeinrichtung (5, 7) als Touch-Screen ausgebildet ist und die entsprechende Eingabeeinrichtung (6, 8) ebenfalls durch diesen Touch-Screen gebildet ist.

9. Mobiles Datenverarbeitungsgerät-Handgerät (1) nach einem der vorhergehenden Ansprüche, **dadurch gekennzeichnet, dass** in das Gehäuse (3) eine Druckeinheit zum Ausdrucken von Informationen integriert ist.

10. Mobiles Datenverarbeitungsgerät-Handgerät (1) nach einem der vorhergehenden Ansprüche, **dadurch gekennzeichnet, dass** in das Gehäuse (3) eine Kommunikationseinheit zur digitalen oder analogen Übertragung von Informationen integriert ist.

11. Mobiles Datenverarbeitungsgerät-Handgerät (1) nach einem der vorhergehenden Ansprüche, **dadurch gekennzeichnet, dass** in das Gehäuse (3) eine Kommunikationseinheit zur digitalen oder analogen Übertragung von Sprache integriert ist.

12. Mobiles Datenverarbeitungsgerät-Handgerät (1) nach einem der vorhergehenden Ansprüche, **dadurch gekennzeichnet, dass** in das Gehäuse (3) ein Mikrofon und ein Lautsprecher zur Sprachein- und Ausgabe integriert ist.
